# EUROPEAN PATENT APPLICATION

(11) **EP 3 539 939 A1**
(43) Date of publication of application: **18.09.2019**
(21) Application number: 18161787.9
(22) Date of filing: 14.03.2018
(51) Int. Cl.: C04B 41/89

(54) **GLASS MATERIAL AS AN INTERMEDIATE BOND COAT FOR A TBC ON A CMC, METHOD AND PRODUCT**

(71) Applicant: Siemens Aktiengesellschaft, 80333 München (DE)
(72) Inventor: Hollingsworth, Peter Stuart, 14050 Berlin (DE); Reymann, Helge, 14167 Berlin (DE); Richter, Johannes, 10559 Berlin (DE)

(57) **Abstract**

By an intermediate silicon oxide layer (10) between a ceramic thermal barrier coating and (13) a CMC substrate (14) the adherence of the TBC (13) to the CMC substrate (4) is improved.

## Description

The invention relates to a intermediate bond coat of a glass material for an improvement of adherence of a thermal barrier coating on a CMC composite substrate, a method and a product.

Ceramic Matrix Composites (CMC) are especially composed of several layers (plies). These plies comprises a ceramic matrix material and ceramic fibers. The matrix stabilizes the fibers. The fibers are responsible for the toughness (and strength) of the ceramic composite.

A CMC component based on silicon carbide-fiber SiC-matrixes or an alumina based CMC with mullite fibers need still a thermal protection.
Due to the limited heat resistance of the CMC materials a TBC needs to be applied on top of the CMCs for a desired higher turbine inlet temperature.

One challenge is to achieve a sufficient bonding between the TBC and the CMC surface. In particular the fibers can cause a TBC spallation due to their smooth surface.

Furthermore, the conventional roughening prior to the TBC coating, e.g. a grit blasting process, is not suitable for CMCs, since the impacting grit blasting particles destroy the ceramic fibers. This leads only to an insufficient bonding between CMC and TBC.

Thermal barrier coatings like a yttria stabilized zirconia or fully stabilized zirconia or combinations of double layer systems with different compositions of zirconia are well known state of the art.

Even a post heat treatment of the CMC-TBC system is not able to improve the bonding strength of the TBC, because the system of a CMC substrate and zirconia or any TBC are quite inert due to its very low diffusion velocity.

There is still a need for improvement of the adherence of the thermal barrier coating which is sprayed on the CMC substrate.

It is therefore the aim of the invention to overcome this problem.

The problem is solved by a CMC layer system according to claim 1, a method according to claim 8 and a product according to claim 11.

In the subclaims further advantages are listed which can be arbitarily combined with each other to yield further advantages.

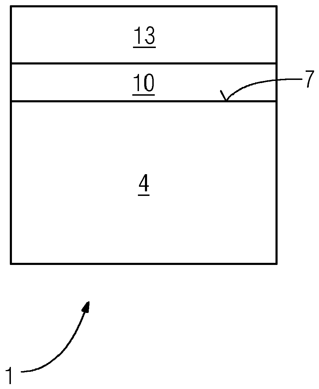

The figure shows schematically a layer system.

The description and the figure are only examples of the invention.

This invention describes to apply a ceramic thermal barrier coating (TBC) on a CMC surface by means of a glass material especially of silicon oxide interlayer and a diffusion heat treatment of the whole CMC-interlayer-TBC system.
Preferably for this approach only a minor, especially mechanical, preparation (roughening) of the CMC surface is needed, because the main bonding mechanism is of chemical nature.

The main preferred idea of this invention is especially the following:
- roughening substrate, especially via gun grit blasting with low pressure
- applying an intermediate layer of the glass material, especially silicon oxide, direct on the CMC, especially using thermal spraying
- applying a zirconia based TBC, especially 8YSZ, on the glassy layer, especially silicon oxide interlayer, using preferably thermal spraying
- heat treatment of the whole CMC-interlayer-TBC system to achieve a chemical bonding between CMC interlayer and TBC-interlayer, because the glass material, especially silicon oxide, diffuses into the substrate as well as into the TBC or into the zirconia.

The main advantage of this invention is the improved bonding strength between CMC and TBC by means of a glassy interlayer especially a silicon oxide interlayer and a following heat treatment (diffusion process).

The glass material or silicon oxide offers the property to interact with the CMC substrate especially alumina and zirconia (TBC). A heat treatment process will lead to diffusion zones between CMC and interlayer as well as between TBC and interlayer, what leads to a better bonding strength, which is based on a chemical (instead of mechanical) bonding mechanism.

The figure shows a layer system 1.

The substrate 4 is a CMC, which can be silicon carbide based or an alumina based material which is the matrix material for fibers.

The fibers are based on silicon carbide, alumina, mullite and/or aluminium/mullite.

The surface 7 of the CMC substrate on which the TBC 13 shall be applied on can be optionally roughened or have a laser treatment which leads to rougher surface 7 of the CMC substrate 4.

According to the invention a glassy layer, especially a silicon oxide layer 10 is applied, especially sprayed directly on the CMC substrate 4.

In the case of silicon oxide silane can be applied onto the substrate 4 and transformed into silicon oxide.

After that a thermal barrier coating 13 is sprayed directly on this glassy layer 10. The layer 10 can be silicon oxide or a borosilicate.

The TBC 13 can reveal also a double layer structure having different material and/or different microstructures. But the silicon oxide layer 10 is always directly on the CMC substrate 4 and the following ceramic layer.

This invention enables to use CMC as vane material. This leads to much higher possible turbine inlet temperatures and subsequently to higher turbine efficiencies.

## Claims

1. CMC layer system (1),
comprising at least:
a CMC substrate (4),
wherein the surface (7) of the CMC substrate (4) is optionally roughened,
a layer (10) of a glass material,
especially silicon oxide,
directly on the surface (7) of the CMC substrate (4) and TBC layer (13) directly on the layer (10) of the glass material,
especially silicon oxide,
especially consisting of a CMC substrate (4), a layer (10) of the glass material,
especially silicon oxide,
and a TBC layer (13).

2. CMC layer system according to claim 1,
wherein the CMC substrate (4) is a silicon carbide (SiC) based CMC.

3. CMC layer system according to claim 1,
wherein the CMC substrate (4) is an alumina (Al₂O₃) based CMC.

4. CMC layer system according to any of the claims 1, 2 or 3,
wherein the fibers of the CMC substrate (4) are made of silicon carbide (SiC).

5. CMC layer system according to any of the claims 1, 2, 3 or 4,
wherein the fibers of the CMC substrate (4) are made of alumina (Al₂O₃), mullite and/or alumina/mullite.

6. CMC layer system according to any of the claims 1 to 5,
wherein the TBC layer (13) is a zirconia (ZrO₂) based ceramic.

7. Ceramic layer system according to any of the claims 1 to 6,
wherein the TBC layer (13) has a double layer structure, having different materials or different microstructure for the two layers.

8. Method to produce a CMC layer system (1),
wherein a layer (10) of the glass material, especially silicon oxide is applied directly between a CMC substrate (4) and a TBC layer (13),
wherein the layer system (1) is heat treated before first usage to achieve diffusion of the glass material, especially silicon oxide into the TBC layer (13) and into CMC substrate (4).

9. Method according to claim 8,
wherein the surface (7) of the CMC substrate (4) is roughened before applying the layer (10) of the glass material, especially silicon oxide.

10. Method according to claim 8 or 9,
wherein the layer (10) of glass, especially silicon oxide and/or TBC (13) are applied by thermal spraying.

11. CMC layer system (1) produced by a method according to any of the claims 8, 9 or 10.
